# EUROPEAN PATENT APPLICATION

(11) **EP 4 537 920 A1**
(43) Date of publication of application: **16.04.2025**
(21) Application number: 23202436.4
(22) Date of filing: 09.10.2023
(51) Int. Cl.: B01D 3/14, B01D 3/42, B01D 5/00, F02D 19/06

(54) **AN ON-BOARD DISTILLER DEVICE FOR A VEHICLE AND AN ON-BOARD FUEL REFORMING SYSTEM**

(71) Applicant: Powertrain Engineering Sweden AB, 418 78 Göteborg (SE)
(72) Inventor: ROLANDSON, Ola, 468 90 Vänersnäs (SE)
(74) Representative: Zacco Sweden AB

(57) **Abstract**

The present disclosure relates to an on-board distiller device (1) for a vehicle comprising a container (2) comprising an upper portion and a lower portion (3a, 3b), the upper portion (3a) being in fluid flow communication with a steam channel (4a) and the lower portion (3b) being in fluid flow communication with a condensation channel (4b). Further, the distiller device (1) is configured to thermally control, by said first and second heating element (5a, 5b), each portion (3a, 3b) of said upper and lower portion to separate the fuel into a condensate fraction and a steam fraction.

## Description

### TECHNICAL FIELD

The present disclosure relates to an on-board distiller device for a vehicle and an on-board fuel reforming system for an internal combustion engine of a vehicle. Further, the present disclosure relates to a method for reforming a fuel performed by a fuel reforming system and a method for 2-stage reforming a fuel performed by a fuel reforming system.

### BACKGROUND

Fuels for internal combustion engines may contain different type of blends. Lately, biofuel is increasingly used in order to reduce the dependency of fossil fuels. Commonly, different variants of Bio-ethanol have gained popularity. Bio-ethanol may be provided in different blends that may constitute 10% (E10) to 85% (E85) of bio-fuel mixtures.

Biofuel can be used in processes to derive fluids that can be reformed to produce clean fuels such as hydrogen. Reforming biofuel to produce hydrogen offers several benefits. For example, it is a clean alternative to traditional fossil fuels and can reduce greenhouse emissions. Fuel reforming uses the heat available in the exhaust gases to upgrade a low carbon fuel to a higher energy level hydrogen fuel that is combusted, with a higher thermal efficiency of the ICE as a result. Generally, fuel reforming technologies for internal combustion engines use the heat available in the exhaust to upgrade ethanol fuel to a higher energy level hydrogen fuel that are used in the combustion with higher thermal efficiency for the ICE as a result.

By distilling biofuel into fractions prior to reforming, several benefits can be achieved. For example, it allows for the separation of desired components such as ethanol and biodiesel which in turn can boost H₂ conversion efficiency. Further, it can be used to reduce the potential for engine clogging and fuel system issues by removing unwanted particles.

Moreover, fractionation can lead to more precise blending and control over fuel characteristics, enabling reduced emissions and more efficient combustion.

Accordingly, there would be desirable to have vehicles that are able to fractionise biofuel into a desired fraction e.g. ethanol, reform said desired fraction to hydrogen and utilize said hydrogen in said internal combustion engine.

In order to be able to distil biofuel into fractions in a vehicle, there is a need for an on-board distiller device that is able to fractionise the biofuel in an accurate manner. To ensure this, the on-board distiller device needs to be able to operate at correct temperatures.

On-board distiller devices of the present art fail to ensure that the on-board distiller devices therein operate at correct temperature which leads to insufficient fractionising of the biofuel. Commonly, conventional distiller device of the present art are affected by the ambient temperature and ambient air-flow.

Thus, there is room for on-board distiller devices of the present art to explore the domain to provide an on-board distiller device that is more efficient than the distiller devices of the present art. Specifically it would be desirable to provide a distiller device that ensures operation at a correct and desired temperature.

### SUMMARY

It is therefore an object of the present disclosure to alleviate at least some of the mentioned drawbacks to provide a distiller device that operates with increased efficiency.

The present disclosure is at least partly based on the insight that an on-board distiller device comprising heat elements configured to thermally control two portions of an interior chamber therein will be more efficient.

The present disclosure relates to an on-board distiller device for a vehicle comprising a container/vessel having an interior chamber comprising an upper portion and a lower portion. The upper portion being in fluid flow communication with a steam channel and the lower portion being in fluid flow communication with a condensation channel. Further, the distiller device comprises a first heating element arranged to provide a first thermal zone in said upper portion and a second heating element arranged to provide a second thermal zone in said lower portion. Further, the distiller device comprises a fuel receiving inlet arranged to supply the chamber with pre-heated fuel, preferably comprising alcohol and/or alkane. Further, the distiller device is configured to thermally control, by said first and second heating element, each portion of said upper and lower portion to separate the fuel into a condensate fraction and a steam fraction. The condensate fraction containing a low volatile part of said fuel and the steam fraction containing a high volatile part of said fuel. Accordingly, the distiller device, by thermally controlling two thermal zones may separate the fuel into two fractions one being gas and one being liquid. In some aspects, the first thermal zone is arranged to separate the fuel into a steam fraction and the second thermal zone is arranged to separate the fuel into a condensate fraction. However, in other aspects it may be the other way around.

An advantage of the on-board distiller device according to the present disclosure is that it can thermally control two heating elements, thereby ensuring that the interior chamber holds a correct temperature. Moreover, as the distiller device provides two thermal zones in one chamber, the distiller device is also compact. Accordingly, it can conveniently fit in a vehicle.

In some aspects, the distiller device is configured to thermally control the upper portion, by the first heating element, to attain a first target temperature and thermally control the lower portion, by the second heating element, to attain a second target temperature. The first and the second target temperatures being different target temperatures. Advantageously, to control the portions to attain specific target temperatures (instead of e.g. generally heating), desired fractions may be divided out from the fuel.

The first and second heating elements may be adjustable heating elements. Then, the distiller device comprises control circuitry configured to obtain sensor data indicative of a first temperature in said upper portion and a second temperature in said lower portion. In other words the sensor data is indicative of temperatures in both the upper and lower portion. Accordingly, the control circuitry may further be configured to obtain, based on a desired distillation cut, a first target temperature for said upper portion and a second target temperature for said lower portion. Further, the control circuitry may be configured to control, if at least one of said first and second temperatures deviate from said first and second target temperature, at least one of the first and the second heating element to attain said first and second target temperature.

An advantage of this is that the heating elements adjust their heating temperatures based on sensor data indicative of temperatures in each portion. Accordingly, the heating elements may be controlled to adjust the temperatures in each zone accurately.

The first target temperature may be greater than the second target temperature such that the upper portion obtains a greater temperature than the lower portion. The lower portion may be closer to ground than said higher portion.

An advantage of this is that the gas can naturally transfer to the upper portion and fluid may naturally be supplied to the condensation channel.

However, the wherein the distiller device may be configured to supply the steam fraction to said steam channel and said condensate fraction to said condensation channel. The interior chamber of the distiller device and/or the channels and/or the pre-heated fuel may be pressurized (by e.g. one or more pumps) to allow for the fractions to be supplied to respective channel. As acknowledged by a skilled person in the art, the channels and/or the interior chamber and/or the pre-heated may be pressurized in different manners in order to facilitate that the steam fraction and the condensate fraction are supplied to respective channels. For example, the pre-heated fuel may be pressurized to 6-10 bar.

The chamber may define a common space bounded by an upper and lower cap of said chamber, wherein said upper portion is associated with said upper cap and said lower portion is associated with said lower cap. Accordingly, the chamber may be e.g. formed essentially as a cylinder in which a space therein comprises both the upper and lower portion such that an upper half of the cylinder is said upper portion and a lower half of said cylinder is said lower portion. However, one should appreciate that the space in the chamber may have any cylindrical, elliptical or irregular shape.

An advantage of this is that it provides a common space with two thermal zones to provide compactness.

The heating elements may be disposed on an outer surface of the container. This may ensure easier maintenance of the heating elements. Preferably, the distiller device comprises one or more sensor device to obtain sensor data indicative of temperatures in the first and second portions. Then, the heating elements may heat accurately even though they are outside the container as they can be controlled based on the sensor data.

The heating elements may be resistive heating elements, preferably heating blankets, heating tape or heating cables.

Further, the chamber may comprise at least one lateral/horizontal condensation surface/shelf having droplet elements dimensioned to create droplets, preferably the droplet elements are spike-shaped. In other words the droplet elements are dimensioned to facilitate the creation of said condensate fraction.

An advantage of this is that this allow the condensate fraction to be created more rapidly thereby providing a potentially faster reformation process.

The fuel receiving inlet may be connected to an intermediate portion of said container. Thereby, the pre-heated fuel can, efficiently, based on the different temperatures in each zone be fractionised and provided to each zone.

The present disclosure also relates to an on-board fuel reforming system for an internal combustion engine of a vehicle comprising a fuel inlet duct arranged to receive a fuel comprising alcohol (preferably ethanol). Such a fuel may be for example E10 or E85 or any other alcohol containing fuel suitable for an internal combustion engine (ICE). Further, the system comprises an evaporator unit connected to the fuel inlet duct, the evaporator unit being arranged to pre-heat the received fuel to a pre-determined temperature. Further, the system comprises a reformed unit arranged to reform a reforming fluid and at least one distiller device according any aspect herein, wherein the at least one distiller device is arranged to:
- thermally control, by said first and second heating element, each portion of said upper and lower portion;
- receive the pre-heated fuel from the evaporator unit to separate the pre-heated fuel into a condensate fraction and a steam fraction;
- supply one of the fractions containing said reforming fluid towards said reformer unit and the other fraction to a mixing tank.

The fuel reformer may be configured to reform the reforming fluid to for example hydrogen gas by utilizing vapour and energy input (obtained e.g. from engine fumes). The reforming fluid may be ethanol i.e. the ethanol may be separated from the fuel.

Thus, after the reformer unit has reformed the reforming fluid to e.g. hydrogen, the hydrogen may be combusted into the ICE i.e. to be used to run the ICE. The hydrogen may be accompanied with fuel from said mixing tank.

Thus, the system provides an efficient manner of providing fuel to the ICE of the vehicle. Accordingly, the system may implemented in connection to the ICE on-board of the vehicle.

The on-board fuel reforming system may comprise a pair of distiller devices according to any aspect herein, wherein a first distiller device of said pair is arranged to thermally control, by said first and second heating element of the first distiller device , each portion of said upper and lower portion (to achieve/obtain/reach defined target temperatures in each portion). Further, the first device is arranged to receive the pre-heated fuel to separate the pre-heated fuel into a first condensate fraction and a first steam fraction. Further, the first distiller device is arranged to supply one of the fractions containing said reforming fluid to the second distiller device and the other fraction to a mixing tank. Moreover, the second distiller device of said pair is arranged to thermally control, by said first and second heating element of the second distiller device, each portion of said upper and lower portion (to achieve defined target temperatures). Further, the second device is arranged to receive, from the first distiller device, the fraction containing said reforming fluid to separate the received fraction containing said reforming fluid into a second condensate fraction and a second steam fraction. Furthermore, the second device is arranged to supply one of the fractions containing said reforming fluid to said reformer unit and the other fraction to said mixing tank.

An advantage of this is that, by utilizing two distiller devices in cooperation with each other, the pre-heated fuel may be fractionised in two-steps. Hence, more specific parts of the fuel may be provided to the reformer unit. For example, the first distiller device may disregard (i.e. provide to the mixing tank) a low volatile fraction, and the second distiller device may disregard a high volatile fraction so that a mid-volatile fraction is provided to the reforming unit.

In some aspects, the first steam fraction and the second condensate fraction contains said reforming fluid, the reforming fluid comprising ethanol. Accordingly, the second condensate fraction may comprise a higher concentration of ethanol compared to the first steam fraction.

The present disclosure further relates to a method for reforming a fuel performed by a fuel reforming system comprising a distiller device according to any aspect herein, comprising the steps of receiving a fuel comprising alcohol into a fuel inlet of a vehicle. Further comprising the step of pre-heating the received fuel and thermally controlling, by said first and second heating element, each portion of said upper and lower portion (to achieve a defined target temperatures). Further, the method comprises supplying the pre-heated fuel to said distiller device to separate the pre-heated fuel into a condensate fraction and a steam fraction and further supplying one of the fractions containing said reforming fluid towards a reformer unit and the other fraction to a mixing tank. Further, the method comprises the step of reforming the reforming fluid.

Then, the method may in some aspect comprise to provide the reformed fluid for an internal combustion engine.

The present disclosure also relates to a method for 2-stage reforming a fuel performed by a fuel reforming system comprising a first and a second distiller device according to any aspect herein comprising the steps of receiving a fuel comprising alcohol into a fuel inlet of a vehicle. Further, comprising the steps of pre-heating the received fuel and thermally controlling, by said first and second heating element of the first distiller device, each portion of said upper and lower portion in said first distiller device (to achieve defined target temperatures). Further, the method comprises the step of supplying the pre-heated fuel to the first distiller device to separate the pre-heated fuel into a first stage condensate fraction and a first stage steam fraction, wherein (preferably the steam fraction) one of the fractions comprises a reforming fluid. Further, the method comprises the steps of thermally controlling, by said first and second heating element of the second distiller device, each portion of said upper and lower portion in said second distiller device (to achieve a defined target temperature). Further, the method comprises the step of supplying the fraction containing said reforming fluid to said second distiller device to separate the received fraction into a second stage condensate fraction and a second stage steam fraction, wherein one of said (preferably the second stage condensate fraction) fractions comprises said reforming fluid. Moreover, the method comprises the step of supplying the fraction comprising said reforming fluid to said reformer unit and the other fraction to a mixing tank. Furthermore, the method comprises the step of reforming the second stage condensate fraction. In other words, the method can separate a desired fraction from the pre-heated fuel in an efficient manner.

The present disclosure also relates to a vehicle comprising the on-board fuel reforming system according to any aspect herein.

### BRIEF DESCRIPTION OF THE DRAWINGS

These and other features and advantages of the present disclosure will now be further clarified and described in more detail, with reference to the appended drawings;
- Figure 1: schematically illustrates a side view of a distiller device in accordance with some aspects of the present disclosure;
- Figure 2: schematically illustrates a system;
- Figure 3: illustrates a table with a list of alkanes in fuel with corresponding boiling points; and
- Figures 4-5: schematically in the form of flowcharts illustrates methods for reforming a fuel.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "thermally control" or "thermally controlling" may refer to that the temperatures of the heating elements are independently controlled. In some aspects, the temperatures may be autonomously/automatically and/or dynamically/continuously controlled.

The term "on-board distiller device" may refer to that the distiller device is mounted within a vehicle preferably operably connected to a reformer unit of said vehicle.

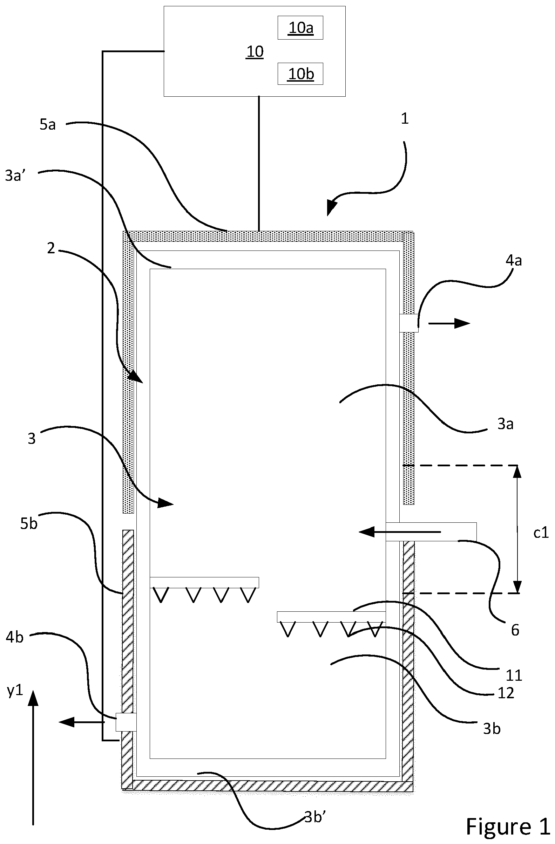

Figure 1 illustrates a schematical side view of an on-board distiller device 1 for a vehicle comprising a container 2 having an interior chamber 3. The interior chamber 3 comprising an upper portion and a lower portion 3a, 3b. Various directions and orientations, such as "upper," "lower," etc. may be generally described herein with reference to the drawings in the usual gravitational frame of reference. Figure 1 illustrates that the upper portion 3a is in fluid flow communication with a steam channel 4a and the lower portion 3b is in fluid flow communication with a condensation channel 4b. Further, Figure 1 illustrates that the distiller device 1 comprises a first heating element 5a arranged to provide a first thermal zone in said upper portion 3a and a second heating element 5b arranged to provide a second thermal zone in said lower portion 3b. Moreover, the distiller device comprises a fuel receiving inlet 6 arranged to supply the chamber 3 with pre-heated fuel comprising alcohol.

Accordingly, the distiller device 1 of Figure 1 is configured to thermally control, by said first and second heating element 5a, 5b, each portion 3a, 3b of said upper and lower portion to separate the fuel into a condensate fraction and a steam fraction. The condensate fraction containing a low volatile part of said fuel and the steam fraction containing a high volatile part of said fuel.

Accordingly, the distiller device 1 may be adapted to be utilized in a 1-stage or 2-stage reforming process. Accordingly, as an example the distiller device 1 may receive, in the fuel receiving inlet 6, fuel (preferably that is evaporated to be in a gaseous state e.g. by a fuel evaporator) containing ethanol mixed with other fluids having a boiling point of at least 98 °C. Then, the distiller device 1 may thermally control the temperature in the first thermal zone to be e.g. 94-96 °C and the second thermal zone to be e.g. 82-86 °C. Consequently, as the boiling point of ethanol is 78,4°C, the ethanol will continue as a steam through said steam channel 4a. Accordingly, as the other fluids have a boiling point of above 96°C they will proceed as condensate through the condensation channel 4b. As a result, the ethanol is separated from the other fluids with a boiling point of at least 98°C.

The distiller device 1 of Figure 1 may be configured to thermally control the upper portion 3a, by the first heating element 5a, to attain a first target temperature and thermally control the lower portion 3b, by the second heating element 5b, to attain a second target temperature.

Figure 1 further illustrates that the distiller device 1 comprises control circuitry 10. Accordingly, the first and second heating elements 5a, 5b are adjustable heating elements. The control circuitry 10 may be configured to obtain sensor data indicative of a first temperature in said upper portion 3a (i.e. the first thermal zone) and a second temperature in said lower portion 3b (i.e. the second thermal zone). Further, the control circuitry 10 may be configured to obtain, based on a desired distillation cut, a first target temperature for said upper portion 3a and a second target temperature for said lower portion 3b. The term "distillation cut" may refer to a specific fractioning of a mixture so that a desired part is provided to the steam channel 4a and another desired part to the condensation channel 4b, the distillation cut may be pre-defined/pre-determined. The distillation cut may be regulated depending on an amount of ethanol that is desired to be supplied to the reformer unit. Furthermore, the control circuitry 10 may be configured to control, if at least one of said first and second temperatures deviate from said first and second target temperature, at least one of the first and the second heating element 5a, 5b to attain said first and second target temperature. The control circuitry 10 may be configured to continuously monitor and control the heating elements 5a, 5b to attain and maintain the target temperatures. The sensor data may be obtained by one or more sensor devices (not shown).

Preferably, the first target temperature is greater than the second target temperature. Nevertheless, this may be varied depending on the desired distillation cut. The desired distillation cut may be inputted by a user or pre-defined/determined by the control circuitry. For example, the control circuitry may determine a desired distillation cut based on external conditions, external conditions being any one of user input, sensor data, environmental data, current fuel stored in the vehicle.

Further, the distiller device 1 of Figure 1 may be configured to supply the steam fraction to said steam channel 4a and said condensate fraction to said condensation channel 4b. This may be performed automatically by the mere dimensional arrangement of the distiller device 1 as the steam will naturally rise towards the first portion 3a and the condensate will naturally be gathered at said lower portion 3b.

Figure 1 further illustrates that the chamber 3 defines a common space that is vertically, along a vertical axis y1 bounded/delimited by an upper and lower cap 3a', 3b' of said chamber.

Figure 1 illustrates that the upper portion 3a may be associated with said upper cap 3a' and said lower portion 3b is associated with said lower cap 3b'.

Further, as illustrated in Figure 1, the heating elements 5a, 5b may be disposed on an outer surface of the container 2 (on opposite sides). The heating elements 5a, 5b may be resistive heating elements, preferably heating blankets, heating tape or heating cables. The heating elements 5a, 5b may each cover a respective cap 3a', 3b' and/or a circumference of the distiller device 1 as illustrated in Figure 1 in which e.g. the first heating element 5a covers the cap 3a' and a part of the circumference associated with said upper portion 3a.

Figure 1 further illustrates that the chamber 3 comprises at least one lateral condensation surface 11 extending essentially perpendicular to the axis y1. The condensation surface 11 comprises droplet elements 12 dimensioned to create droplets, preferably the droplet elements are spike-shaped as illustrated in Figure 1. Thereby, the fraction intended to be condensate will be so in a more efficient/rapid manner.

As further illustrated in Figure 1 the fuel receiving inlet 6 is connected to an intermediate portion c1 of said container 2.

It should be noted that the control circuitry 10 may comprise one or more memory devices (not shown). The memory devices may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the control circuitry 10. Each memory device may store any suitable instructions, data (such as temperature data obtained from sensors) or information, including a computer program, software, an application including one or more of logic, rules, code, tables, etc. and/or other instructions (such as instructions for attaining and maintaining a target temperature) capable of being executed by the control circuitry 10 and, utilized. The control circuitry 10 may further include, for example, one or more central processing units (CPUs), graphics processing units (GPUs) dedicated to performing calculations, and/or other processing devices. The control circuitry 10 may further comprise one or more interfaces (e.g. input/output interfaces) enabling the control circuitry 10 to output control signals for controlling the heating elements 5a, 5b and receive data from e.g. temperature sensors. Further, the control circuitry 10 may comprise one or more modules for thermally controlling the portions 3a, 3b. For example, the control circuitry 10 may comprise a controlling module 10a configured to transmit control signals to the heating elements to control the temperatures to target temperatures. Also, the control circuitry 10 may comprise a monitoring module 10b for continuously monitoring the temperatures in each zone, the monitoring module 10b may also be configured to obtain the sensor data.

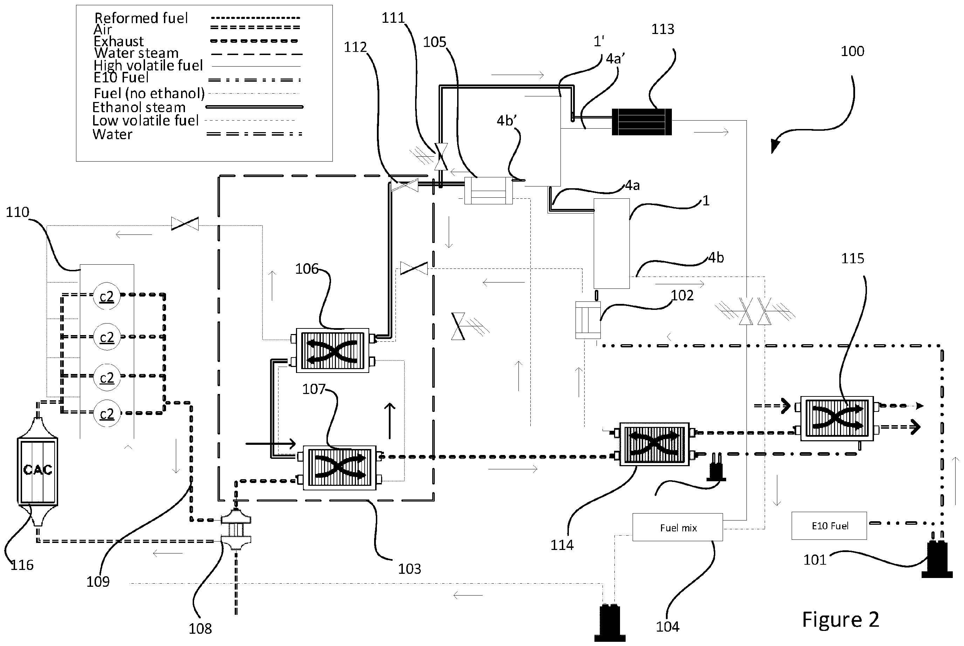

Figure 2 schematically illustrates an on-board fuel reforming system 100 for an internal combustion engine of a vehicle in accordance with some aspects of the present disclosure. The on-board fuel reforming system 100 comprises two distiller devices 1, 1'. However, in other aspects the system 100 may comprise one distiller device 1. The first distiller 1 is arranged to thermally control, by first and second heating elements thereof 5a, 5b (which are shown in Figure 1) each portion of said upper and lower portion 3a, 3b. I.e. the first distiller device is arranged to attain and maintain, by the first and second heating elements 5a, 5b target temperatures. Further the first distiller device 1 is arranged to receive the pre-heated fuel to separate the pre-heated fuel into a first condensate fraction (that may be in liquid form) and a first steam fraction (that may be in gaseous form). Further Figure 1 illustrates that the distiller device 1 is arranged to supply one of the fractions containing said reforming fluid to the second distiller device 1' and the other fraction to a mixing tank 104 (via a condenser 113). Accordingly, the second distiller device 1' of said pair is arranged to thermally control, by said first and second heating element 5a, 5b of the second distiller device 1', each portion of said upper and lower portion 3a, 3b to attain and maintain a target temperature. Further, the system 100 is arranged to receive, from the first distiller device 1, the fraction containing said reforming fluid to separate the received fraction containing said reforming fluid into a second condensate fraction and a second steam fraction. Further, the second distiller device 1' is arranged to supply one of the fractions containing said reforming fluid to said reformer unit 103 and the other fraction to said mixing tank 104.

In some aspects, the first steam fraction and the second condensate fraction contains said reforming fluid, the reforming fluid comprising ethanol. Accordingly, the second condensate fraction may pass an evaporator 105 arranged to evaporate the second condensate fraction prior to supplying said fraction to the reformer unit 103.

As illustrated in Figure 2, the reformer unit comprises a reformer/catalytic converter 107 which may fluidically communicate with a heat exchanger 106. The reformer 107 may be configured to obtain heat from the exhaust, obtain the reforming fluid and obtain water steam in order to reform the reforming fluid to e.g. hydrogen fuel that can be used in the combustion with higher thermal efficiency for the ICE 110 as a result.

As Figure 1 illustrates, the reforming fluid may be supplied to an inlet of the reformer unit 103 from the distiller device 1'. The ethanol and water steam are further mixed in a heat exchanger 106 therein, the mass ratio being controlled by the pump mass flow of one or more pumps (not shown) in the system 100. A (pre-heated) water steam and the reforming fluid is then fed from the heat exchanger 106 into the integrated catalytic converter/fuel reformer device 107, where the water and ethanol steam are transformed into syngas containing H₂.

The reformed fuel that is produced in the integrated catalytic converter/fuel reformer unit 107 may then be supplied to a gas inlet manifold that is connected to cylinders c2 of the ICE 110.

The ICE 110 illustrated in Figure 2 comprises four cylinders c2. However, the ICE 110 may comprise less or more cylinders c2. The ICE 110 may be part of the system 100 or coupled to the system 100. Figure 2 further illustrates that the mixing tank 104 may be connected so to be arranged to supply the ICE 110 with a fuel mix which partly may be the fuel outputted from the first distiller device 1. Further, Figure 2 illustrates that the system may comprise a turbocharger 108 that may compress air that is supplied from an air intake and transports the intake air through an air duct via a cooling unit to an intake manifold of the ICE 110 for supply to the cylinders c2. The exhaust gases of the fuel that has been burned in the cylinders c2 may be arranged to leave the ICE 110 via an exhaust manifold and flow through an exhaust duct 109 to drive the turbocharger 108. As illustrated in Figure 2, after passing the turbocharger 108, the exhaust gases may pass into said reformer unit 103 to communicate with the heat exchanger 106 and catalytic converter/fuel reformer 107.

As further illustrated in Figure 2, the system may comprise one or more release valves and control valves 111, 112 adapted to regulate, direct or control the flow of fluid within the system. E.g. the valves 111, 112 may be adapted to allow the fluid to be supplied from the distiller devices 1, 1' in a desired direction. Further, as illustrated in Figure 2, the system 100 may comprise a water evaporator 114 in connection to the reformer 107 and an air cooled water condensator 115 in connection to said water evaporator 114. Further, the system 100 may comprise a charge air cooler (CAC) 116 that air from the turbocharger 108 will pass prior to reaching the ICE 110. It should be noted that the system 100 is an example embodiment of a system 100 and may be varied within the scope of the present disclosure.

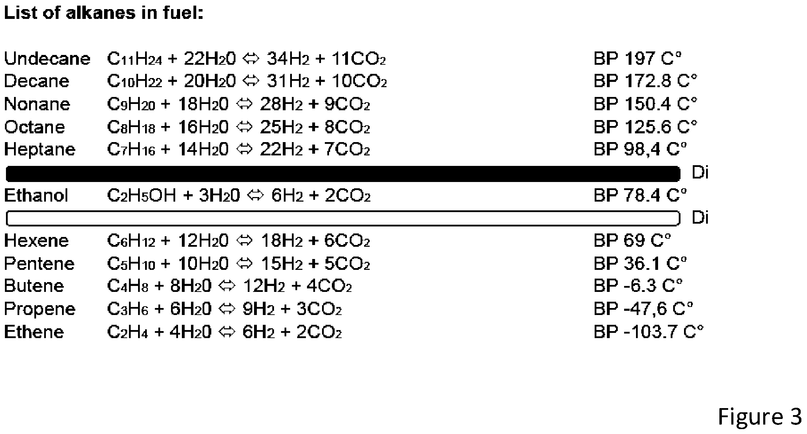

Figure 3 illustrates a table with a list of alkanes in fuel with corresponding boiling points. Accordingly, the pre-heated fuel may comprise the alkanes listed in Figure 3. Referring to the system of Figure 2 in which the distiller devices 1, 1' comprises same features as the distiller device 1 of Figure 1, in order to separate ethanol from the pre-heated fuel containing the alkanes of Figure 3 and supply the ethanol to the reformer unit 103, the first distiller device 1 may have a temperature in said lower portion 3b being e.g. 82-86 °C and being 94-96 °C in said upper portion 3a. Accordingly, the first distiller device 1 separates the low volatile fraction with higher than 82-86 °C boiling point, by condensation in the lower part of the distiller. The high volatile fraction containing ethanol will then (be gaseous) and continue as steam through channel 4a towards the second distiller device 1'. Accordingly, the second distiller device 1' is upstreams of the first distiller device 1.

Accordingly, the second distiller device 1' may then have a temperature in said lower portion 3b being 72-76 °C and 84-86 °C in said upper portion 3a. Accordingly, the second distiller device 1' separates only the ethanol fraction with higher than 72-76 °C boiling point, by condensation in the lower portion 3b of the distiller device 1'. Ethanol (or middle volatile fraction) condensate out as liquid to heater, through condensation channel 4b' of the second distiller device 1' and continue as steam to fuel reformer 110 (see Figure 2) through steam channel 4a' of the second distiller device 1'. High volatile fraction continues as steam to a condenser that transform it back to liquid. Accordingly, the first distiller device 1 separates Undecane, Decane, Nonane, Octane and Heptane from Ethanol, Hexene, Pentene, Butene, Propene and Ethene. Also, the second distiller device 1' separates Ethanol from Hexene, Pentene, Butene, Propene and Ethene. Thereby, essentially pure ethanol may be supplied to the reformer unit 103. It should be noted that the function of each distiller device may be to provide two zones, one for providing condense and one for providing evaporation of fluid. This is provided by the temperature difference in each thermal zone which allow circulation of fluid to separate alkagenes. Generally, a larger temperature difference provides a greater circulation of fluid. However, a larger temperature difference may also provide a more rapid but less accurate separation compared to a lower temperature difference. Therefore, in some aspects herein, the control circuitry may be configured to, e.g., based on user input or any other input (such as sensor data or any other data) determine a temperature difference required to obtain a specific separation time of the fuel (to achieve a desired separation accuracy). Further, the control circuitry may thermally control the first and the second heating element to obtain said temperature difference.

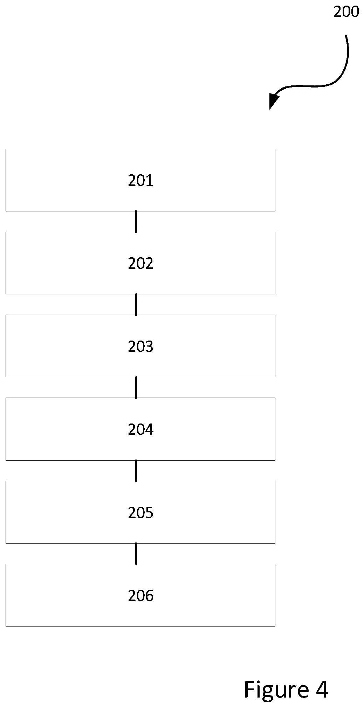

Figure 4 schematically in the form of a flowchart illustrates a method 200 for reforming a fuel performed by a fuel reforming system comprising a distiller device according to any aspect herein. The method comprising the steps of receiving 201 a fuel comprising alcohol into a fuel inlet of a vehicle. Further comprising the step of pre-heating 202 the received fuel. Further, the method 200 comprises the step of thermally controlling 203, by said first and second heating element, each portion of said upper and lower portion. Further, the method comprises the step of supplying 204 the pre-heated fuel to said distiller device to separate the pre-heated fuel into a condensate fraction and a steam fraction. Furthermore the method comprises supplying 205 one of the fractions containing said reforming fluid towards a reformer unit and the other fraction to a mixing tank. Furthermore, the method 200 comprises reforming 206 the reforming fluid.

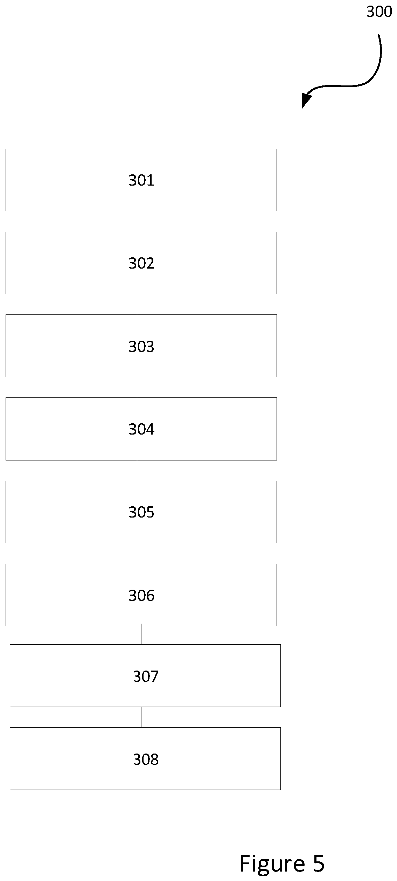

Figure 5 schematically in the form of a flowchart illustrates a method 300 for 2-stage reforming a fuel performed by a fuel reforming system comprising a first and a second distiller device according to any aspect herein comprising the steps of receiving 301 a fuel comprising alcohol into a fuel inlet of a vehicle and pre-heating 302 the received fuel. Further, the method 300 comprises the step of thermally controlling 303, by said first and second heating element of the first distiller device, each portion of said upper and lower portion in said first distiller device followed by supplying 304 the pre-heated fuel to the first distiller device to separate the pre-heated fuel into a first stage condensate fraction and a first stage steam fraction, wherein one of the fractions comprises a reforming fluid. Moreover, the method comprises the step of thermally controlling 305, by said first and second heating element of the second distiller device, each portion of said upper and lower portion in said second distiller device and supplying 306 the fraction containing said reforming fluid to said second distiller device to separate the received fraction into a second stage condensate fraction and a second stage steam fraction, wherein one of said fractions comprises said reforming fluid. Furthermore, the method 300 comprises the steps of supplying 307 the fraction comprising said reforming fluid to said reformer unit and the other fraction to a mixing tank and reforming 308 the second stage condensate fraction.

## Claims

1. An on-board distiller device (1) for a vehicle comprising:
- a container (2) having an interior chamber (3) comprising an upper portion and a lower portion (3a, 3b), the upper portion (3a) being in fluid flow communication with a steam channel (4a) and the lower portion (3b) being in fluid flow communication with a condensation channel (4b);
- a first heating element (5a) arranged to provide a first thermal zone in said upper portion (3a);
- a second heating element (5b) arranged to provide a second thermal zone in said lower portion (3b);
- a fuel receiving inlet (6) arranged to supply the chamber (3) with pre-heated fuel comprising alcohol;
wherein the distiller device (1) is configured to:
- thermally control, by said first and second heating element (5a, 5b), each portion (3a, 3b) of said upper and lower portion (3a 3b) to separate the fuel into a condensate fraction and a steam fraction.

2. The distiller device according to claim 1, wherein the distiller device (1) is configured to thermally control the upper portion (3a), by the first heating element (5a), to attain a first target temperature and thermally control the lower portion (3b), by the second heating element (5b), to attain a second target temperature.

3. The distiller device (1) according to claims 1, wherein the first and second heating elements (5a, 5b) are adjustable heating elements, wherein the distiller device (1) comprises control circuitry configured (10) to:
- obtain sensor data indicative of a first temperature in said upper portion (4a) and a second temperature in said lower portion (3b);
- obtain, based on a desired distillation cut, a first target temperature for said upper portion (3a) and a second target temperature for said lower portion (3b);
- control, if at least one of said first and second temperatures deviate from said first and second target temperature, at least one of the first and the second heating element (5a, 5b) to attain said first and second target temperature.

4. The distiller device (1) according to any one of the claims 2 or 3, wherein the first target temperature is greater than the second target temperature.

5. The distiller device (1) according to any one of the claims 1-4, wherein the distiller device (1) is configured to:
- supply the steam fraction to said steam channel (4a) and said condensate fraction to said condensation channel (4b).

6. The distiller device (1) according to any one of the claims 1-5, wherein the chamber (3) defines a common space bounded by an upper and lower cap of said chamber, wherein said upper portion (3a) is associated with said upper cap (3a') and said lower portion (3b) is associated with said lower cap (3b').

7. The distiller device (1) according to any one of the claims 1-6, wherein the heating elements (5a, 5b) are disposed on an outer surface of the container (2).

8. The distiller device (1) according to any one of the claims 1-7, wherein the heating elements (5a, 5b) are resistive heating elements, preferably heating blankets, heating tape or heating cables.

9. The distiller device (1) according to any one of the claims 1-8, wherein the chamber (3) comprises at least one lateral condensation surface (11) having droplet elements (12) dimensioned to create droplets, preferably the droplet elements are spike-shaped.

10. The distiller device (1) according to any one of the claims 1-9, wherein the fuel receiving inlet (6) is connected to an intermediate portion (c1) of said container (2).

11. An on-board fuel reforming system (100) for an internal combustion engine (110) of a vehicle comprising:
- a fuel inlet duct (101) arranged to receive a fuel comprising alcohol;
- an evaporator unit (102) connected to the fuel inlet duct, the evaporator unit (102) being arranged to pre-heat the received fuel;
- a reformer unit (103) arranged to reform a reforming fluid;
- at least one distiller device (1, 1) according to the distiller device (1, 1') of any one of the preceding claims, wherein the at least one distiller device (1) is arranged to:
- thermally control, by said first and second heating element (5a, 5b), each portion of said upper and lower portion (3a, 3b);
- receive the pre-heated fuel from the evaporator unit (102) to separate the pre-heated fuel into a condensate fraction and a steam fraction;
- supply one of the fractions containing said reforming fluid towards said reformer unit (103) and the other fraction to a mixing tank (104).

12. The on-board fuel reforming system (100) according to claim 11, wherein the system (100) comprises a pair of distiller devices (1, 1') according to any one of the claims 1-10, wherein a first distiller device (1) of said pair is arranged to:
- thermally control, by said first and second heating element (5a, 5b) of the first distiller device (1), each portion of said upper and lower portion (3a, 3b);
- receive the pre-heated fuel to separate the pre-heated fuel into a first condensate fraction and a first steam fraction;
- supply one of the fractions containing said reforming fluid to the second distiller device (1') and the other fraction to a mixing tank (104)
wherein the second distiller device (1') of said pair is arranged to:
- thermally control, by said first and second heating element (5a, 5b) of the second distiller device (1'), each portion of said upper and lower portion (3a, 3b);
- receive, from the first distiller device (1), the fraction containing said reforming fluid to separate the received fraction containing said reforming fluid into a second condensate fraction and a second steam fraction;
- supply one of the fractions containing said reforming fluid to said reformer unit (103) and the other fraction to said mixing tank (104).

13. The fuel reforming system (100) according to claim 12, wherein the first steam fraction and the second condensate fraction contains said reforming fluid, the reforming fluid comprising ethanol.

14. A method (200) for reforming a fuel performed by a fuel reforming system comprising a distiller device according to any one of the claims 1-10, comprising:
- receiving (201) a fuel comprising alcohol into a fuel inlet of a vehicle;
- pre-heating (202) the received fuel;
- thermally controlling (203), by said first and second heating element, each portion of said upper and lower portion;
- supplying (204) the pre-heated fuel to said distiller device to separate the pre-heated fuel into a condensate fraction and a steam fraction;
- supplying (205) one of the fractions containing said reforming fluid towards a reformer unit and the other fraction to a mixing tank;
- reforming (206) the reforming fluid.

15. A method (300) for 2-stage reforming a fuel performed by a fuel reforming system comprising a first and a second distiller device according to any one of the claims 1-10 comprising:
- receiving (301) a fuel comprising alcohol into a fuel inlet of a vehicle;
- pre-heating (302) the received fuel;
- thermally controlling (303), by said first and second heating element of the first distiller device, each portion of said upper and lower portion in said first distiller device;
- supplying (304) the pre-heated fuel to the first distiller device to separate the pre-heated fuel into a first stage condensate fraction and a first stage steam fraction, wherein one of the fractions comprises a reforming fluid;
- thermally controlling (305), by said first and second heating element of the second distiller device, each portion of said upper and lower portion in said second distiller device;
- supplying (306) the fraction containing said reforming fluid to said second distiller device to separate the received fraction into a second stage condensate fraction and a second stage steam fraction, wherein one of said fractions comprises said reforming fluid;
- supplying (307) the fraction comprising said reforming fluid to said reformer unit and the other fraction to a mixing tank
- reforming (308) the second stage condensate fraction.
